# EUROPÄISCHE PATENTANMELDUNG

(11) **EP 3 073 089 A1**
(43) Veröffentlichungstag der Anmeldung: **28.09.2016**
(21) Anmeldenummer: 16000565.8
(22) Anmeldetag: 09.03.2016
(51) Int. Cl.: F02B 29/04, F01P 3/04, F01P 3/18, F02M 26/30, F02F 7/00, F01M 11/00

(54) **BRENNKRAFTMASCHINE MIT ABGASFÜHRUNG UND/ODER WASSERGEKÜHLTEM LADELUFTKÜHLER**

(30) Priorität: 27.03.2015 DE 102015003908
(71) Anmelder: DEUTZ Aktiengesellschaft, 51149 Köln (DE)
(72) Erfinder: Joisten-Pieritz, Joachim, 53925 Kall (DE); Smolenzev, Xenia, 50823 Köln (DE); Kipke, Peter, 57462 Olpe (DE); Kleinschmidt, Toni, 50321 Brühl (DE); Jung, Marco, 50677 Köln (DE); Kurt, Tobias, 41539 Dormagen (DE); Hoffmann, Peter, 50677 Köln (DE); Schwabauer, Paul, 56410 Montabaur (DE); Knaps, Gerhard, 53844 Troisdorf (DE); Blum, Ralf, 52064 Aachen (DE)

(57) **Zusammenfassung**

2. Die Erfindung betrifft eine Brennkraftmaschine mit einem Kurbelgehäuse 1 und einem Zylinderkopf.

## Beschreibung

Die Erfindung betrifft eine Brennkraftmaschine mit Abgasrückführung und/ oder wassergekühltem Ladeluftkühler.

Eine derartige Brennkraftmaschine ist aus der DE 691 30 976 T2 bekannt. Diese Brennkraftmaschine weist ein Abgasrückführsystem mit einer Verteilleitung auf, die parallel zu einer Frischgasleitung verläuft. Die Frischgasleitung weist abzweigende Frischgaskanäle auf, die zu den jeweils zwei Einlassventilen einer Zylindereinheit führen. In die Frischgaskanäle mündet die Verteilleitung mit einzelnen Einspeisleitungen ein.

Der Erfindung liegt die Aufgabe zugrunde, den Anbau der Abgasrückführeinrichtung, insbesondere der Verteilleitung, an die Brennkraftmaschine zu verbessern.

Diese Aufgabe wird mit den kennzeichnenden Merkmalen von Patentanspruch 1 und 9 gelöst.

Hierbei ist von Vorteil, dass die Brennkraftmaschine äußerst kompakt gebaut ist und dass die Wärmeübertragung ohne unnötige Verrohrung äußerst effektiv erfolgen kann.

In Weiterbildung der Erfindung ist vorgesehen, dass die Kühlstrecke Turbulenzerzeuger aufweist, die für eine noch bessere Wärmeübertragung Sorge tragen.

In weiterer Ausgestaltung der Erfindung sind in die Kanäle Blenden und/ oder Drosseleinrichtungen eingesetzt. Mit diesen Bauteilen kann eine individuelle Abstimmung der den einzelnen Zylindereinheiten zugeführten Abgasmenge erfolgen.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: eine perspektivische Ansicht eines Kurbelgehäuses mit in das Kurbelgehäuse integriertem Kühlgehäuse eines Abgaskühlers einer Abgasrückführeinrichtung,
- Fig. 2: eine schematische Darstellung des Kurbelgehäuses gemäß Fig. 1 und seiner Medienströme,
- Fig. 3: eine Ansicht des Kurbelgehäuses aus Fig. 2 mit einem AGR-Kühlgehäuse, dessen Grundkörper Bestandteil des Kurbelgehäuses ist und wobei der Grundkörper von einem Deckel abgedeckt ist,
- Fig. 4: eine Ansicht des Kurbelgehäuses aus Fig. 2 mit einem AGR- und einem wassergekühltem Ladeluft-Kühlgehäuse, dessen Grundkörper Bestandteil des Kurbelgehäuses ist und wobei der Grundkörper von einem Deckel abgedeckt ist,
- Fig. 5: eine Ansicht des Kurbelgehäuses aus Fig. 2 mit einer Hitzeschutz-Abdeckung,
- Fig. 6: eine Ansicht des Kanals zur Misch- und Steuereinheit,
- Fig. 7: eine schematische Darstellung der Regelung der Abgas- und Kühlmittelströme,

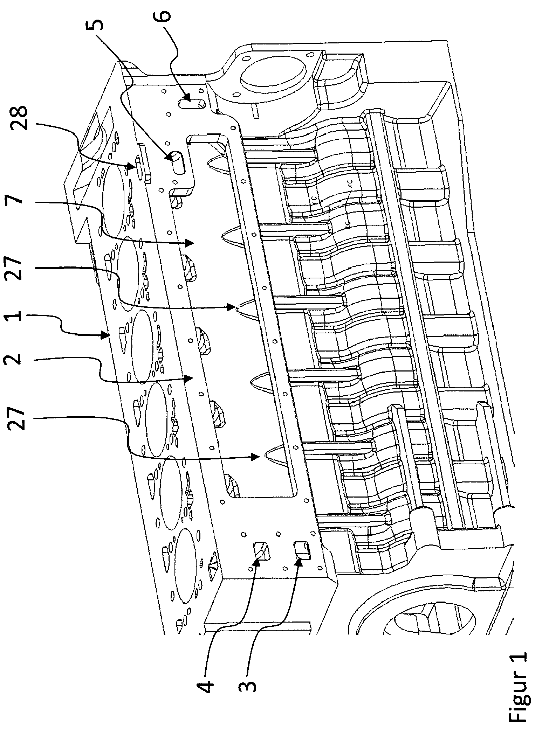

Figur 1 zeigt den Zylinderblock 1 des Kurbelgehäuses der Brennkraftmaschine, die an ihrer Längsseite eine ebene Flanschfläche 2 aufweist. In der Dichtungsebene der ebenen Flanschfläche 2 ist eine Kühlmitteleintrittsöffnung 3 im Bereich einer Stirnseite der Brennkraftmaschine vorgesehen, die Kühlmittel zum Kühler 13 durchlässt. In unmittelbarer Nachbarschaft zur Kühlmitteleintrittsöffnung 3 ist die Kühlmittelaustrittsöffnung 4 des Kühlers 13 ebenfalls in der Dichtungsebene der Flanschfläche 2 angeordnet. In der Dichtungsebene der ebenen Flanschfläche 2 ist ein Abgaseintritt zum Kühler im Bereich der anderen Stirnseite der Brennkraftmaschine vorgesehen, der Abgase zum Kühler 13 durchlässt. In unmittelbarer Nachbarschaft des Abgaseintritts zum Kühler 13 ist die integrierte Abgasdurchführung vom Kühler ebenfalls in der Dichtungsebene der Flanschfläche 2 angeordnet. Die interne Kühlstrecke 7 weist nasenförmige Erhebungen auf, die im Zusammenwirken mit Strömungsleitelementen, die am Kühlergehäuse 12, 13 angeordnet sind, für eine turbulente Strömung des um bzw. zwischen den nasenförmigen Erhebungen und den Strömungsleitelementen strömenden Kühlmittels sorgt.

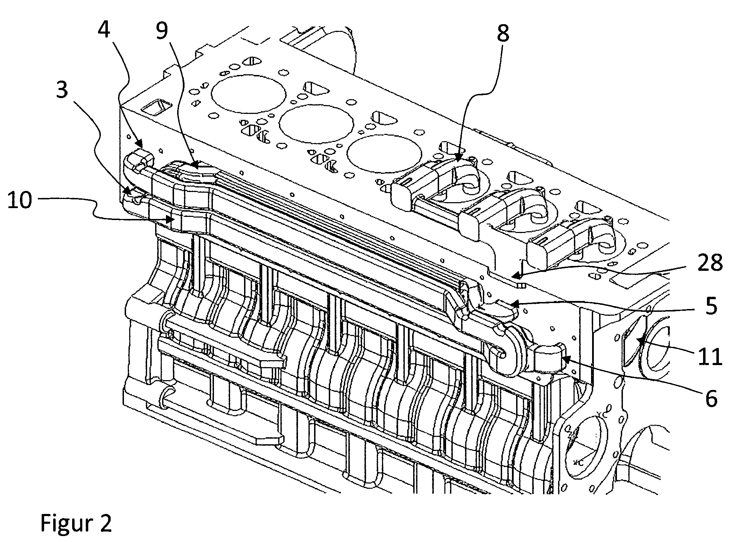

In Figur 2 wird der Zylinderblock 1 des Kurbelgehäuses der Brennkraftmaschine gezeigt. An seiner Längsseite weist das Kurbelgehäuse 1 eine ebene Flanschfläche 2 auf. In der Dichtungsebene der ebenen Flanschfläche 2 ist eine Kühlmitteleintrittsöffnung 3 im Bereich einer Stirnseite der Brennkraftmaschine vorgesehen, die Kühlmittel zum Kühler 13 durchlässt. In unmittelbarer Nachbarschaft zur Kühlmitteleintrittsöffnung 3 ist die Kühlmittelaustrittsöffnung 4 des Kühlers 13 ebenfalls in der Dichtungsebene der Flanschfläche 2 angeordnet. Das Kühlmittel tritt über die Kühlmitteleintrittsöffnung 3 in den Bereich der Leitungsführung 10 des Kühlmittels in den Kühler 13 ein, nimmt die Wärme des Abgases auf und verlässt den Kühler mittels der die Kühlmittelaustrittsöffnung 4. In der Dichtungsebene der ebenen Flanschfläche 2 ist ein Abgaseintritt 5 zum Kühler 13 im Bereich der anderen Stirnseite der Brennkraftmaschine vorgesehen, der Abgase zum Kühler 13 durchlässt. In unmittelbarer Nachbarschaft des Abgaseintritts zum Kühler 13 ist die integrierte Abgasdurchführung vom Kühler 13 ebenfalls in der Dichtungsebene der Flanschfläche 2 angeordnet, durch den das Abgas den Kühler 13 wieder verlässt. Die interne Kühlstrecke 7 weist nasenförmige Erhebungen auf, die im Zusammenwirken mit Strömungsleitelementen, die am Kühlergehäuse 12, 13 angeordnet sind, für eine turbulente Strömung und somit einen besseren Wärmeübergang des um bzw. zwischen den nasenförmigen Erhebungen und den Strömungsleitelementen strömenden Kühlmittels mit dem Kühler 12, 13 sorgt. Die Gasentnahme aus dem Zylinderkopf erfolgt über die Kanalführung 8 im Zylinderkopf und wird über die Abgaseintrittsöffnung 28 mittels einer Kanalverbindung im Kurbelgehäuse 1 an den Abgaseintritt 5 weitergeleitet. Das den Abgaseintritt 5 erreichende Abgas wird in die Leitungsführung AGR im Kühler 9 eingeleitet und gibt im Kühler 13 seine Abwärme ans Kühlmittel ab. Anschließend verlässt das abgekühlte Abgas den Kühler 13 mittels der integrierten Abgasdurchführung 6 durch das Kurbelgehäuse 1 in Richtung der Abgasanlage.

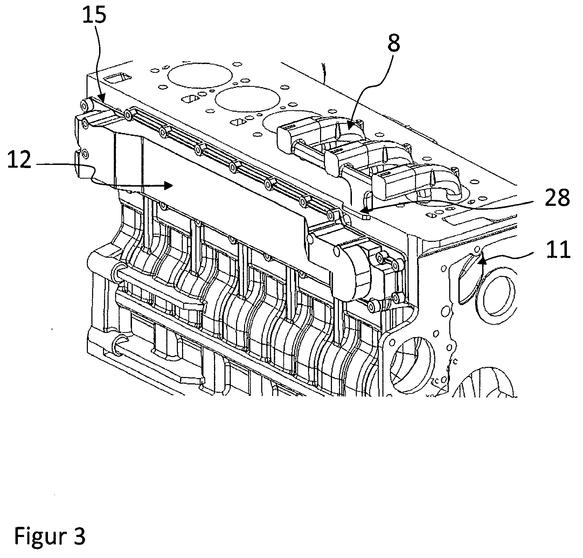

Figur 3 zeigt den Zylinderblock 1 des Kurbelgehäuses der Brennkraftmaschine. An seiner Längsseite weist das Kurbelgehäuse 1 eine ebene Flanschfläche 2 auf. In der Dichtungsebene der ebenen Flanschfläche 2 ist eine vom AGR Kühler 12 verdeckte Kühlmitteleintrittsöffnung 3 im Bereich einer Stirnseite der Brennkraftmaschine vorgesehen, die Kühlmittel zum AGR-Kühler 12 durchlässt. In unmittelbarer Nachbarschaft zur Kühlmitteleintrittsöffnung 3 ist die ebenfalls verdeckte Kühlmittelaustrittsöffnung 4 des AGR-Kühlers 12 ebenfalls in der Dichtungsebene der Flanschfläche 2 angeordnet. Das Kühlmittel tritt über die Kühlmitteleintrittsöffnung 3 in den Bereich der Leitungsführung 10 des Kühlmittels in den Kühler 12 ein, nimmt die Wärme des Abgases auf und verlässt den Kühler mittels der die Kühlmittelaustrittsöffnung 4. In der Dichtungsebene der ebenen Flanschfläche 2 ist ein ebenfalls verdeckter Abgaseintritt 5 zum AGR-Kühler 12 im Bereich der anderen Stirnseite der Brennkraftmaschine vorgesehen, der Abgase zum Kühler 12 durchlässt. In unmittelbarer Nachbarschaft des Abgaseintritts zum Kühler 12 ist die integrierte Abgasdurchführung vom Kühler 12 ebenfalls in der Dichtungsebene der Flanschfläche 2 angeordnet, durch den das Abgas den Kühler 12 wieder verlässt. Die verdeckte interne Kühlstrecke 7 weist nasenförmige Erhebungen auf, die im Zusammenwirken mit Strömungsleitelementen, die am Kühlergehäuse 12 innen angeordnet sind, für eine turbulente Strömung und somit einen besseren Wärmeübergang des um bzw. zwischen den nasenförmigen Erhebungen und den Strömungsleitelementen strömenden Kühlmittels mit dem Kühler 12 sorgt. Die Gasentnahme aus dem Zylinderkopf erfolgt über die Kanalführung 8 im Zylinderkopf und wird über die Abgaseintrittsöffnung 28 mittels einer Kanalverbindung im Kurbelgehäuse 1 an den Abgaseintritt 5 weitergeleitet. Das den Abgaseintritt 5 erreichende Abgas wird in die Leitungsführung AGR im Kühler 9 eingeleitet und gibt im Kühler 12 seine Abwärme ans Kühlmittel ab. Anschließend verlässt das abgekühlte Abgas den Kühler 12 mittels der integrierten Abgasdurchführung 6 durch das Kurbelgehäuse 1 mittels integrierter Leitungsführung 11 zur Einlassseite in Richtung der Abgasanlage. Zwischen AGR-Kühler 12 und Flanschfläche 2 ist eine Dichtung 15 angeordnet.

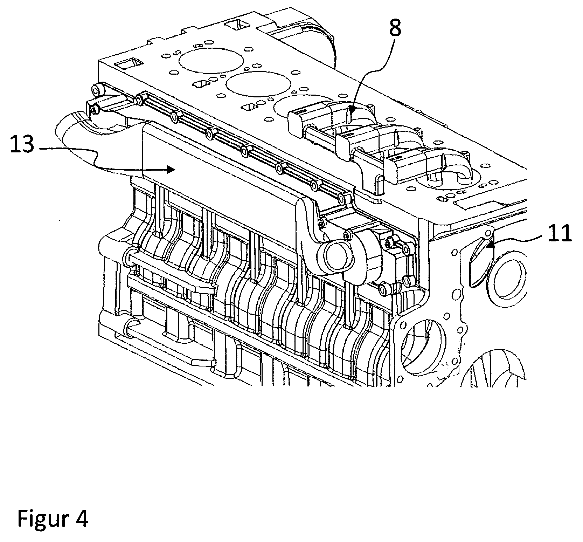

In Figur 4 wird eine Ansicht des Kurbelgehäuses aus Fig. 2 mit einem AGR- und einem wassergekühltem Ladeluft-Kühlgehäuse 13 gezeigt, dessen Grundkörper Bestandteil des Kurbelgehäuses ist und wobei der Grundkörper von einem Deckel abgedeckt ist.

Der Zylinderblock 1 des Kurbelgehäuses der Brennkraftmaschine wird mit dem Abgasrückführ(AGR)- und einem wassergekühltem Ladeluft-Kühlgehäuse 13 an einer seiner Längsseiten verschraubt. An dieser Längsseite weist das Kurbelgehäuse 1 eine ebene Flanschfläche 2 auf. In der Dichtungsebene der ebenen Flanschfläche 2 ist eine Kühlmitteleintrittsöffnung 3 im Bereich einer Stirnseite der Brennkraftmaschine vorgesehen, die Kühlmittel zum Kühler 13 durchlässt. In unmittelbarer Nachbarschaft zur Kühlmitteleintrittsöffnung 3 ist die Kühlmittelaustrittsöffnung 4 des Kühlers 13 ebenfalls in der Dichtungsebene der Flanschfläche 2 angeordnet. Das Kühlmittel tritt über die Kühlmitteleintrittsöffnung 3 in den Bereich der Leitungsführung 10 des Kühlmittels in den Kühler 13 ein, nimmt die Wärme des Abgases auf und verlässt den Kühler mittels der die Kühlmittelaustrittsöffnung 4. In der Dichtungsebene der ebenen Flanschfläche 2 ist ein Abgaseintritt 5 zum Kühler 13 im Bereich der anderen Stirnseite der Brennkraftmaschine vorgesehen, der Abgase zum Kühler 13 durchlässt. In unmittelbarer Nachbarschaft des Abgaseintritts zum Kühler 13 ist die integrierte Abgasdurchführung vom Kühler 13 ebenfalls in der Dichtungsebene der Flanschfläche 2 angeordnet, durch den das Abgas den Kühler 13 wieder verlässt. Die interne Kühlstrecke 7 weist nasenförmige Erhebungen auf, die im Zusammenwirken mit Strömungsleitelementen, die am Kühlergehäuse 12, 13 angeordnet sind, für eine turbulente Strömung und somit einen besseren Wärmeübergang des um bzw. zwischen den nasenförmigen Erhebungen und den Strömungsleitelementen strömenden Kühlmittels mit dem Kühler 12, 13 sorgt. Die Gasentnahme aus dem Zylinderkopf erfolgt über die Kanalführung 8 im Zylinderkopf und wird über die Abgaseintrittsöffnung 28 mittels einer Kanalverbindung im Kurbelgehäuse 1 an den Abgaseintritt 5 weitergeleitet. Das den Abgaseintritt 5 erreichende Abgas wird in die Leitungsführung AGR im Kühler 9 eingeleitet und gibt im Kühler 13 seine Abwärme ans Kühlmittel ab. Anschließend verlässt das abgekühlte Abgas den Kühler 13 mittels der integrierten Abgasdurchführung 6 durch das Kurbelgehäuse 1 mittels integrierter Leitungsführung 11, Abgaskanäle, die in das Kurbelgehäuse 1 eingegossen sind, in Richtung der Abgasanlage.

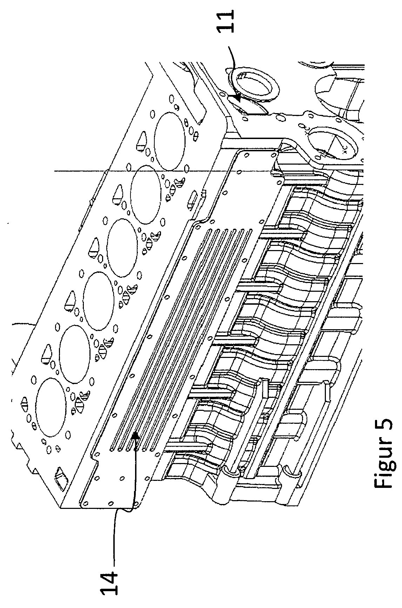

In Figur 5 wird eine Ansicht des Kurbelgehäuses aus Fig. 2 mit einer Hitzeschutz-Abdeckung 14, die im Bereich der Flanschfläche 2 angeschraubt ist und mittels des Kühlwassers angelieferte Wärme abstrahlt, dargestellt.

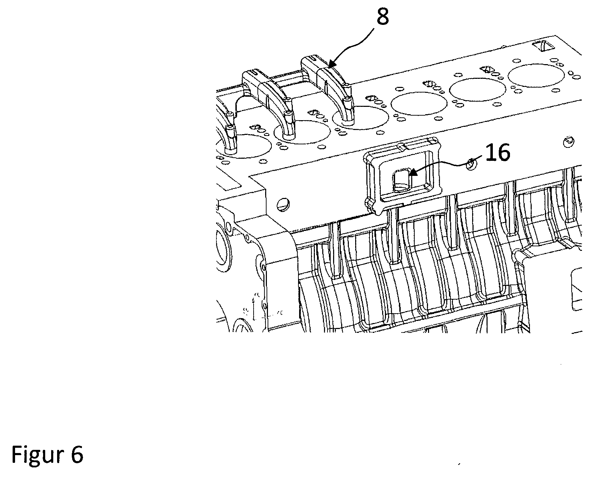

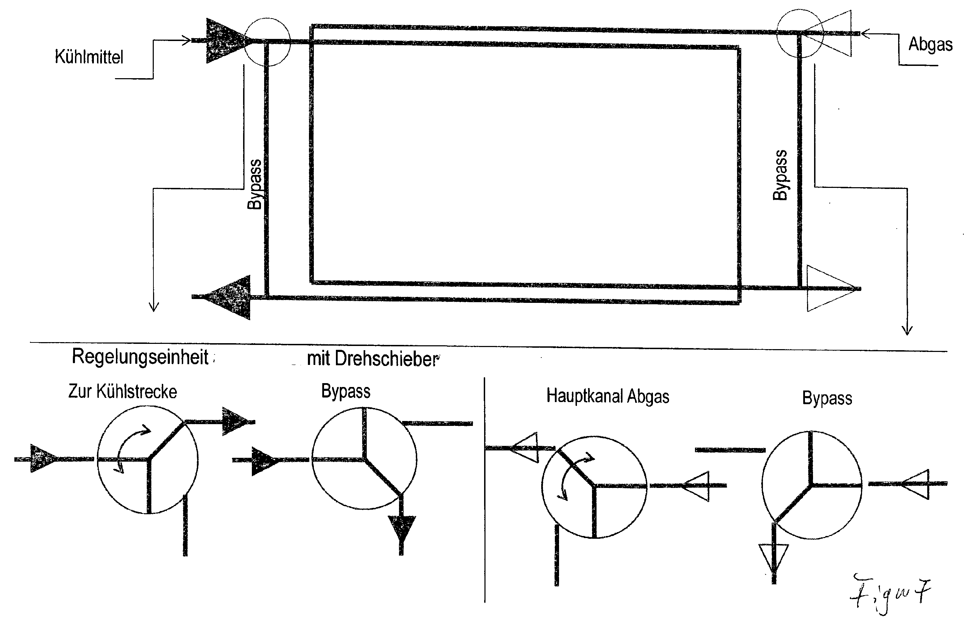

Figur 6 zeigt eine Ansicht des Kanals zur Misch- und Steuereinheit 16, der auf der der Flanschfläche 2 gegenüberliegenden Längsseite des Kurbelgehäuses 1 angeordnet ist und die in Figur 7 dargestellte Steuer- bzw. Regelung der Medienströme unterstützt.

In Figur 7 wird eine schematische Darstellung der Regelung der Abgas- und Kühlmittelströme der Brennkraftmaschine gezeigt

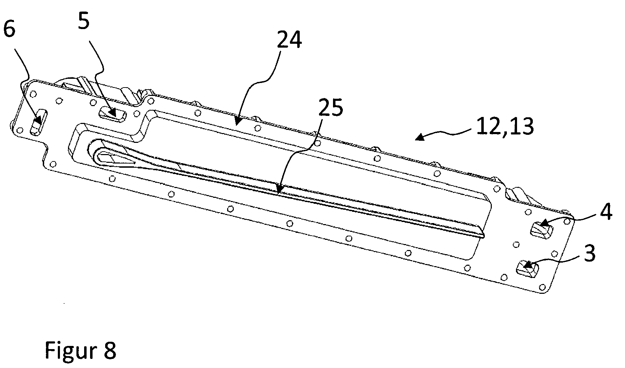

In Figur 8 wird der Kühler 12, 13 dargestellt. An der Innenseite des Kühlers 12, 13 ist ein Strömungsleitelement angeordnet, das bereits weiter oben beschrieben worden ist.
- 1: Zylinderblock
- 2: AGR/WLLK - Interface (ebene Flanschfläche)
- 3: Kühlmitteleintritt zum Kühler (regelbar)
- 4: Kühlmittelaustritt vom Kühler
- 5: Abgaseintritt zum Kühler (regelbar)
- 6: integrierte Abgasdurchführung vom Kühler
- 7: interne Kühlstrecke
- 8: Gasentnahme aus dem Zylinderkopf
- 9: Leitungsführung AGR im Kühler
- 10: Leitungsführung Kühlmittel im Kühler
- 11: integrierte Leitungsführung zur Einlassseite
- 12: Mit Kühler AGR
- 13: Mit Kühler AGR/WLLK
- 14: Abdeckung/Hitzeschutz
- 15: Dichtung
- 16: Kanal zur Misch- und Steuereinheit

## Patentansprüche

1. Brennkraftmaschine mit einem Kurbelgehäuse und einem Zylinderkopf, umfassend wenigstens einen Zylinderblock (1), wenigstens eine ebene Flanschfläche (2) zur Aufnahme wenigstens eines Kühlers (12, 13), wenigstens einen Kühler (12, 13), wenigstens einen Kühlmitteleintritt zum Kühler (regelbar) (3), wenigstens einen Kühlmittelaustritt vom Kühler (4), wenigstens einen Abgaseintritt zum Kühler (5), wenigstens eine integrierte Abgasdurchführung vom Kühler (6) und wenigstens eine interne Kühlstrecke (7).

2. Brennkraftmaschine nach Anspruch 1,
**dadurch gekennzeichnet, dass** die Kühlstrecke (7) Turbulenzerzeuger aufweist.

3. Brennkraftmaschine nach einem oder mehreren der vorherigen Ansprüche,
**dadurch gekennzeichnet, dass** das der Kühlmitteleintritt zum Kühler (3) regelbar ausgeführt ist.

4. Brennkraftmaschine nach einem oder mehreren der vorherigen Ansprüche,
**dadurch gekennzeichnet, dass** das der Abgaseintritt zum Kühler (5) regelbar ausgeführt ist.

5. Brennkraftmaschine nach einem oder mehreren der vorherigen Ansprüche,
**dadurch gekennzeichnet, dass** ein AGR/WLLK-Interface (ebene Flanschfläche) (2), im Wesentlichen an der Längsseite des Kurbelgehäuses angeordnet ist.

6. Brennkraftmaschine nach einem oder mehreren der vorherigen Ansprüche,
**dadurch gekennzeichnet, dass** ein AGR/WLLK-Interface (ebene Flanschfläche) (2), im Wesentlichen an der Längsseite des Zylinderkopfes angeordnet ist.

7. Brennkraftmaschine nach einem oder mehreren der vorherigen Ansprüche
**dadurch gekennzeichnet, dass** in die Kanäle Blenden und/oder Drosseleinrichtungen eingesetzt sind.

8. Brennkraftmaschine nach einem oder mehreren der vorherigen Ansprüche
**dadurch gekennzeichnet, dass** der AGR/WLLK-Kühler (13) mit der Kühlstrecke (7) kommunizierend verbunden ist.

9. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.
